(19) Europäisches Patentamt
European Patent Office
Office européen des brevets

(11) **EP 0 623 814 B1**

(12) **EUROPÄISCHE PATENTSCHRIFT**

(45) Veröffentlichungstag und Bekanntmachung des Hinweises auf die Patenterteilung:
**03.09.1997 Patentblatt 1997/36**

(51) Int Cl.⁶: **G01M 3/38**, G01M 3/00

(21) Anmeldenummer: **94102513.2**

(22) Anmeldetag: **19.02.1994**

(54) **Verfahren zum Betreiben eines fahrbaren Rohrinspektionsgerätes**

Procedure for operating a movable pipe inspecting device

Procédé d'opération d'un dispositif mobile d'inspection d'un canalisation

(84) Benannte Vertragsstaaten:
**AT CH DE ES FR GB LI SE**

(30) Priorität: **05.05.1993 DE 4314769**

(43) Veröffentlichungstag der Anmeldung:
**09.11.1994 Patentblatt 1994/45**

(73) Patentinhaber: **RICO GESELLSCHAFT FüR MIKROELEKTRONIK mbH**
**D-87437 Kempten (DE)**

(72) Erfinder: **Scheck, Werner, Dr.**
**D-87437 Kempten (DE)**

(74) Vertreter: **Hübner, Hans-Joachim, Dipl.-Ing.**
**Mozartstrasse 31**
**87435 Kempten (DE)**

(56) Entgegenhaltungen:
**EP-A- 0 282 687**         **DE-A- 3 229 441**

**Beschreibung**

Die Erfindung betrifft ein Verfahren zum Betreiben eines fahrbaren Rohrinspektionsgerätes, das einen, um zwei rechtwinklig zueinander liegende Achsen verschwenkbaren Kamerakopf aufweist, dessen Schwenkbewegungen von fernsteuerbaren Motoren bewirkt und mittels Drehwinkel-Meßwertgebern gemessen werden, deren Meßsignale auf einem Monitor darstellbar und auswertbar sind.

Aus der DE-A-36 05 654 ist ein derartiges Verfahren bekannt. Das Rohrinspektionsgerät dient dazu, z.B. unterirdische Rohre auf Schadstellen zu untersuchen. Nach dem bekannten Verfahren werden die elektrischen Signale der Drehwinkel-Meßwertgeber auf einem Monitor außerhalb des Rohres digital angezeigt. Die Anzeige erfolgt in Winkelgraden. Um Schadstellen zu erkennen, muß die Kamera in der jeweiligen Blickrichtung scharf gestellt, also fokussiert werden. Eine Abschätzung der Größe einer Schadstelle ist mit diesem Verfahren nur unvollkommen möglich. Wird die Kamera z. B. aus der Längsrichtung in eine Querlage verschwenkt, so erscheint das Bild auf dem Monitor stark überbelichtet und die Beleuchtung müßte entweder herabgesetzt oder eine Blendeneinstellung müßte verändert werden, um auf dem Bild Details erkennen zu können. Solche manuellen Handeinstellarbeiten sind zeitaufwendig.

Ein ähnliches Rohrinspektionsgerät zeigt die DE-U-91 03 527. Die Signale der auch hier vorgesehenen Drehwinkel-Meßwertgeber dienen zur Erfassung der Kameraposition und Anzeige auf einem Monitor. Um die Größe einer Schadstelle an der Rohrwand abschätzen zu können, wird hier ein Maßstab im Sichtbereich der Kamera angeordnet, der auf dem Monitor erscheint und eine Größenabschätzung der Schadstelle erleichtert. Zur Ermittlung von Fugenbreiten kann die Kamera auf einen Fugenrand scharfgestellt werden, wonach der Fahrwagen längs des Rohres so weit verfahren wird, bis die Kamera auf den anderen Fugenrand zielt. Die Fahrstrecke ist dann ein Maß für die Fugenbreite. Schadstellen können mit dieser Methode aber nicht auf Position und Größe untersucht werden, weil diese in der Regel nicht in Querebenen des Rohres verlaufen.

Die DE 41 14 601 zeigt ebenfalls ein gattungsgemäßes Rohrinspektionsgerät, dessen Kamerasignale in digitalisierter Form auf einem Monitor sichtbar gemacht werden. Eine externe Bedieneinheit erlaubt das Ein- und Ausschalten des Inspektionsgerätes und das Ansteuern der Motoren zum Bewegen der Kamera. Um jedoch das Kamerasystem auf ein Rohrwandbild scharf zu stellen und um die Position einer Schadstelle und deren Dimension zu bestimmen, sind nach wie vor etliche manuelle Einstellvorgänge nötig, und dennoch lassen sich insbesondere die Dimensionen von Schadstellen nur grob abschätzen.

Aufgabe der Erfindung ist es, ein Verfahren zum Betreiben eines Inspektionsgerätes zu schaffen und dieses Inspektionsgerät entsprechend auszubilden, um manuelle Einstellvorgänge einzusparen, sodaß Rohrinspektionen in kürzerer Zeit und genauer durchgeführt werden können.

Diese Aufgabe wird bei dem erfindungsgemäßen Verfahren dadurch gelöst, daß die Meßsignale der Drehwinkel-Meßwertgeber einer Auswerteelektronik zugeführt werden, die nach Eingabe oder Messung von rohrspezifischen Konstanten, welche dem Rohrradius und dem Rohrachsabstand des Kameraobjektives proportional sind, die Sichtlinienlänge zwischen Kameraobjektiv und einem Zielpunkt auf der Rohrinnenfläche errechnet und in Abhängigkeit von diesem Rechenwert mindestens eine der folgenden Operationen automatisch durchgeführt wird:

a) die Auswerteelektronik ermittelt die dem Rechenwert L entsprechende Sollposition des Objektives oder Bildaufnehmers und aktiviert dessen Antrieb bis die Kamera auf den Zielpunkt automatisch fokussiert ist.

b) die Beleuchtungsstärke eines Scheinwerfers des Inspektionsgerätes und/oder die Einstellung einer Blende der Kamera wird/werden automatisch in Abhängigkeit von der Sichtlinienlänge verändert.

c) die Position des Zielpunktes wird durch Errechnung der Koordinaten in der Auswerteelektronik auf einem Monitor angezeigt; und

d) der Rechenwert oder die Positionskoordinaten des Zielpunktes wird/werden zwischengespeichert und die Kamera wird auf einen zweiten Zielpunkt gerichtet, die auf ihn bezogene zweite Sichtlinienlänge wird errechnet und der Abstand beider Zielpunkte wird durch vektorielle Subtraktion beider Sichtlinienlängen in der Auswerteelektronik rechnerisch ermittelt.

Um z.B. eine Kamera automatisch zu fokussieren, ist es bekannt (siehe zum Beispiel EP-A-0 282 687), Entfernungssensoren einzusetzen, jedoch sind solche Sensoren und die zugehörige Auswerteelektronik teuer. Während bei allgemeinen Kameraanwendungen kein Zusammenhang zwischen Blickwinkel und Entfernung besteht, ist diese aber bei der Rohrinspektion über die Zylindergeometrie nahezu perfekt vorhanden. Daher läßt sich mit den schon bisher für manuelle Fokussierung erfaßten Meßdaten und wenigen vorprogrammierbaren rohr- und gerätespezifischen Daten die Entfernung des Objetivs vom Bild- oder Zielpunkt sehr genau rechnerisch ermitteln. Tatsächlich gelingt es bei Kenntnis des Rohrdurchmessers und des Achsabstandes zwischen Kamera und Rohr nur durch Auswertung der Signale der beiden Drehwinkel-Meßwertgeber für die Kamerabewegungen die Sichtlinie zwischen Objektiv und Zielpunkt in Länge und Richtung exakt zu bestimmen. Die Längenbestimmung dient dann unmittelbar zur Fokussierung des Kamerasystems, womit jegliche manuelle Bedienung entfällt. Das Kamerabild auf dem Monitor erscheint immer mit optimaler Schärfe. Nachdem die Sichtlinienlänge der Kamera in jeder Kamerastellung neu ermittelt wird, läßt sich dieser Rechenwert auch sehr leicht zur Anpassung der Beleuchtungsstärke und/oder Blendeneinstellung des Kamerasystems einsetzen, da hier eine einfache quadratische Abhängigkeit besteht. Die Helligkeit der Abbildung auf dem Monitor kann also automatisch angepaßt werden, sodaß jegliche Nachstellungen von Hand entfallen.

Da die beiden Drehwinkel-Meßwertgeber auch eine Errechnung der Richtung der Kamerasichtlinie ermöglichen, lassen sich erfindungsgemäß nicht nur die Positionen von Schadstellen mit X- Y-Koordinaten auf dem Monitor darstellen, sondern auch deren Dimension viel genauer berechnen, als dies bisher durch optisches Abschätzen anhand eines Vergleichsmaßstabs möglich war.

Insgesamt bringt die Erfindung den Vorteil, daß mit einer einfach programmierbaren Auswerteelektronik eine Vielzahl von Handbedienungsoperationen entfällt, da diese Operationen nunmehr automatisch und viel schneller ausgeführt werden. Da die Monitorbilder immer scharf erscheinen, können Schadstellen nicht mehr so leicht übersehen werden, sodaß das Inspektionsgerät sicherer arbeitet.

Mit der im Patentanspruch 2 wiedergegebenen Formel ist eine analytisch exakte Errechnung des Objektivabstandes vom betrachteten Rohrwandbereich möglich. Die Stellgröße für das Fokus-Regelsystem steht in einem festen Zusammenhang mit dem errechneten Entfernungswert, sodaß mit einem entsprechenden softwaremäßigen Aufwand der Stellantrieb für die Fokusverstellung automatisch angesteuert werden kann. Da in der Praxis geringfügige Zugeständnisse an die absolute Genauigkeit ohne weiteres zulässig sind, kann der analytische Zusammenhang zwischen Stellgröße für das Fokus-Regelsystem zusammen mit der Fokus-Tabelle erheblich vereinfacht werden, indem eine geeignete Näherungslösung für das Steuerprogramm verwendet wird. Als eine solche Näherungslösung kommt ein Produktansatz mit Variablentrennung und linearisierten Termen in den Fokuswerten in Frage.

Obwohl der Durchmesser bzw. im Fall eines eiförmigen Querschnittes die Querschnittsform des Rohres vor der Untersuchung im allgemeinen bekannt ist, sodaß die entsprechenden Daten vor Untersuchungsbeginn manuell eingegeben werden können, erlaubt die Erfindung eine Bestimmung des Rohrdurchmessers vor Ort. Die dafür erforderlichen Maßnahmen bilden den Gegenstand von Patentanspruch 5. Mit diesen Maßnahmen wird ein Irrtum hinsichtlich des tatsächlichen Rohrdurchmessers ausgeschlossen und es werden eventuelle Fehler durch manuelle Falscheingaben vermieden. Dazu bedarf es lediglich einer manuellen Fokussierung der Kamera in zwei Stellungen, vorzugsweise mit einer Blickrichtung vertikal aufwärts und vertikal abwärts. Die zugehörigen Positionen des Stellantriebes des Fokussystems werden dann durch einfache Betätigung der Eingabetaste in den Speicher der Auswerteelektronik übernommen und für die anschließende Rohroberflächenuntersuchung verwendet.

Die Erfindung betrifft weiterhin ein Rohrinspektionsgerät mit den Merkmalen des Oberbegriffes von Anspruch 6. Ein solches Inspektionsgerät ist aus dem eingangs genannten Stand der Technik bekannt. Insbesondere weist der drehbare Kamerakopf ein rechtwinklig zur Rotationsachse schwenkbares Kameragehäuse auf und es sind motorische Antriebe für die Schwenkbewegungen und den Antrieben zugeordnete Drehwinkel-Meßwertgeber vorgesehen. Letztere dienen beim Stand der Technik lediglich dazu, die Bewegungen der Kamera auf einem Monitor zu reproduzieren. Erfindungsgemäß werden nun diese Meßwertdaten der Drehwinkelsensoren in der Auswerteelektronik mit zwei rohr-/gerätespezifischen Eingabedaten nach einem vorgegebenen Programm zu einem momentanen Rechenwert verarbeitet, der der Sichtlinienlänge zwischen dem Kameraobjektiv und dem in dessen Blickrichtung liegenden Zielpunkt auf der Rohrwand proportional ist. Dieser Rechenwert wird nun erfindungsgemäß verwendet, um weitere Operationen automatisch durchzuführen. Mit dem absoluten Betrag der Sichtlinienlänge wird einmal die Kamera automatisch fokussiert. Dazu weist das Inspektionsgerät einen, dem Stellantrieb des Objektivs oder Bildaufnehmers zugeordneten Postions-Meßwertgeber auf und die Auswerteelektronik steuert den Stellantrieb an, bis der Istwert des Meßwertgebers dem Sollwert entspricht, den das Rechenprogramm als Funktion der Sichtlinienlänge ermittelt. Da weiterhin zwischen der Sichtlinienlänge und einer passenden Beleuchtungsstärke eine umgekehrt quadratische Abhängigkeit besteht, wird erfindungsgemäß auch eine automatische Helligkeitssteuerung des Monitorbildes realisiert. Zu diesem Zweck weist entweder der Scheinwerfer eine Helligkeitssteuerung oder die Kamera eine Blendensteuerung auf und nach einmaliger Vorwahl einer gewünschten Bildschirmhelligkeit sorgt nun die Auswerteelektronik dafür, daß bei Änderung der Sichtlinienlänge eine automatische Helligkeitsanpassung erfolgt, sodaß die Bildschirmhelligkeit in allen Sichtrichtungen der Kamera erhalten bleibt.

Da mit dem Rechenprogramm die Auswerteelektronik nicht nur der absolute Betrag der Sichtlinienlänge sondern der Sichtlinienvektor, also auch die Blickrichtung der Kamera erfaßt werden, wird erfindungsgemäß der Rohrwand-Zielpunkt auf dem Monitor in seiner exakten Position abgebildet und mit seinen Koordinaten dargestellt.

Die Dimensionen einer Schadstelle lassen sich mit der Erfindung schnell und sehr genau zu bestimmen. Bei einem Rohrwandriß wird die Kamera auf das eine Ende des Risses gerichtet. Die Fokussierung erfolgt automatisch. Durch Tastendruck an der Eingabetastatur wird dieser Zielpunkt gespeichert. Dann wird die Kamera bei feststehendem Fahrwagen auf das andere Ende des Risses eingestellt und auch diese Position wird gespeichert. Danach errechnet die Auswerteelektronik die Rißlänge, die zusammen mit weiteren Angaben, insbesondere den Koordinaten markanter Punkte des Risses in einem Protokoll ausgedruckt werden. Noch einfacher erfolgt die Dimensionsbestimmung bei feststehender Kamera durch Anfahren der Rißendpunkte mit einem Cursor und Anklicken auf dem Monitor. Das Programm errechnet den Abstand beider Punkte.

Anhand der Zeichnung, die ein Ausführungsbeispiel darstellt, wird die Erfindung näher beschrieben.

Es zeigt:

FIG. 1    eine schematisierte Ansicht einer fahrbaren Rohruntersuchungs-Fernsehkamera und

FIG. 2    ein Blockdiagramm zur Erläuterung der automatischen Fokusverstellung der Kamera

Ein Fahrzeug 10 mit Raupenantrieb 12 weist an der vorderen Stirnseite einen Kamerakopf 14 auf, der ein Kameragehäuse 16 mit einer Kamera 18 enthält. Das Kameragehäuse 16 weist beidseitig der Kamera 18 je eine Beleuchtungseinheit 20 auf, die also dieselben Bewegungen wie die Kamera 18 ausführt. Zwischen dem Kamerakopf und dem Fahrzeug 10 ist eine Zusatzbeleuchtungseinheit 22 montiert, die ständig in Rohrlängsrichtung gerichtet ist.

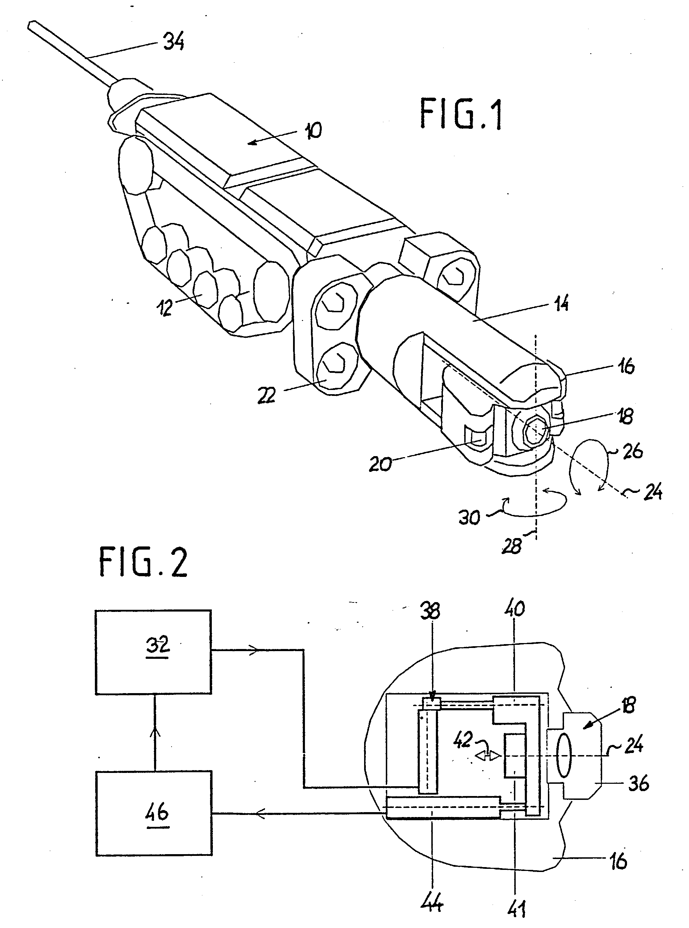

Der Kamerakopf 14 ist um die Längsachse 24 im Fahrzeug 10 drehbar gelagert und mit einem nicht dargestellten Drehantrieb gekoppelt. Dieser Antriebsmotor ist gegenläufig antreibbar, sodaß der Kamerakopf in beiden Richtungen gedreht werden kann, wie durch den Doppelpfeil 26 in Figur 1 veranschaulicht ist.

Das Kameragehäuse 16 ist in einem Schlitz des Kamerakopfes 14 um eine zur Achse 24 rechtwinklige Achse 28 schwenkbar gelagert und mit einem entsprechenden Schwenkantrieb (nicht dargestellt) verbunden. Das Kameragehäuse 16 kann somit gegenläufig jeweils um 135° entsprechend dem Doppelpfeil 30 verschwenkt werden.

Dem Antriebsmotor für die Kamerakopfdrehung im Fahrzeug 10 ist ein Positionsmeßwertgeber in Form eines Drehwinkel-Meßwertgebers - kurz Drehgeber - zugeordnet. Der Kamerakopf 14 weist einen entsprechenden Drehgeber zur Bestimmung der Schwenkposition des Kameragehäuses 16 auf. Im Fahrzeug befindet sich eine Steuerelektronik 32 (FIG. 2), der die Signale der Drehgeber der Kameraschwenk- und -drehmotoren über Steuerleitungen zugeführt werden. Das Fahrzeug 10 zieht ein Schleppkabel 34 hinter sich her, das Energieversorgungsleitungen und eine Kommunikationsleitung aufweist und mit einem nicht dargstellten Arbeitsplatz außerhalb des zu untersuchenden Rohres verbunden ist.

Blickt die Kamera 18 entsprechend FIGUR 1 in Rohrlängsrichtung, so beträgt der Abstand zwischen Kamera und dem sichtbaren Bereich im Rohr mehrere Meter. Wird dagegen das Kameragehäuse um 90° in eine Querrichtung verschwenkt, so kann dieser Abstand - je nach Rohrdurchmesser - bis zum Rohrwandbereich nur wenige Zentimeter betragen. Zur Scharfeinstellung des Kamerabildes müssen das Objektiv 36 (FIG. 2) oder der Bildaufnehmer 41 der Kamera 18 in Richtung der Rotationsachse 24 bei jeder Änderung der Kameraposition verstellt werden. Zu diesem Zweck ist im Kameragehäuse 16 ein Stellmotor 38 mit Exzenterscheibe vorgesehen, der einen verschiebbaren Träger 40 des Bildaufnehmers 41 in Richtung des Doppelpfeils 42 verschiebt. Ein Linearwegaufnehmer 44 erfaßt die jeweilige Position des Trägers 40 und gibt diese Daten an einen Mikroprozessor 46.

Der Mikroprozessor 46 wird von einem Programm gesteuert, das als Variable den Rotationswinkel T bei Drehung der Kamera 18 um die Achse 24 und den Schwenkwinkel P der Kamera 18 bei Verschwenkung um die Achse 28 aufweist. Die durch entsprechende Drehgeber gemessenen Drehwinkel werden in digitalisierter Form dem Mikroprozessor 46 zugeführt. Als weitere Eingabedaten dienen der Radius R des zu untersuchenden Rohres und der Abstand D der Achse des zu untersuchenden Rohres von der Rotationsachse 24. Der jeweilige Abstand L der Kamera 18 vom Zielpunkt auf dem zu untersuchenden Rohrwandbereich, also die Sichtlinienlänge, läßt sich nun mit den vorgegebenen Werten nach folgender Formel errechnen:

$$L = \frac{D \sin T + \sqrt{R^2 - D^2 \cos^2 T}}{\sin P}$$

wobei wiederum jedem bestimmten Rechenwert L eine bestimmte Position des Bildaufnehmers 41 - oder im Falle eines verstellbaren Objektivs 36 dessen Position - entspricht. Bei jeder Lageveränderung der Kamera 18 errechnet der Mikroprozessor 46 die entsprechende momentane Sollposition des Bildaufnehmers 41 neu und die Steuerelektronik 32 sorgt dafür, daß der Bildaufnehmer 41 diese Position einnimmt. Das am Monitor angezeigte Bild des jeweiligen Rohrwandbereiches ist also auf den Zielpunkt automatisch fokussiert.

Um den spezifischen, für jede Rohruntersuchung gleichbleibenden Daten des Rohres und des Kamerafahrzeuges zu ermitteln, wird vorzugsweise folgendermaßen vorgegangen. Der Kamerakopf 14 wird um 90° um die Achse 24 gedreht und das Kameragehäuse 16 wird ebenfalls um 90° aus seiner Mittelstellung in eine Querstellung verschwenkt. Die Kamera 18 blickt dann lotrecht nach unten und in dieser Stellung wird durch die Eingabetastatur am Arbeitsplatz die Steuerelektronik 32 manuell solange angesteuert, bis das Kamerabild seine maximale Schärfe hat. Die Position des Bildaufnehmers 41 wird dann als erste Eingabegröße gespeichert. Das Kameragehäuse 16 wird dann um 180° verschwenkt, blickt also lotrecht nach oben und in dieser Position wird der Bildaufnehmer 41 wiederum anhand des Monitorbildes fokussiert. Auch diese Position des Bildaufnehmers 41 wird im Mikroprozessor gespeichert und mit diesen beiden Werten liegen dann die Konstanten D und R für die anstehende Rohruntersuchung fest.

Um zu verhindern, daß der Bildaufnehmer 41 beim Wechsel von großer zu kleiner Sichtlinienlänge L übersteuert wird, weil die Beleuchtungsdichte mit abnehmender Sichtlinienlänge L quadratisch zunimmt, findet gemäß einem Erfindungsaspekt eine automatische Anpassung der Beleuchtungsstärke derart statt, daß die Beleuchtungsdichte auf dem betrachteten Rohrwandwandfeld konstant bleibt. Die Scheinwerfer werden von einem elektronischen Helligkeitsregler durch das Programm der Auswerteelektronik 32 nach der Formel für die Lichtstärke X der Scheinwerfer 20

$$X = C\ L^2$$

angesteuert, wobei C einmal eine von Hand auf passende Helligkeit am Helligkeitsregler eingestellte Konstante ist.

Anstelle der Lichtstärkenregelung kann das Kameraobjektiv auch mit einer einstellbaren Blende versehen sein, wobei die Blendenöffnung X in Abhängigkeit von der Sichtlinienlänge L nach obiger Formel verstellt wird.

Mit der Erfindung ist nun eine sehr schnelle Messung von Dimensionen auf der Rohrwand möglich, beispielsweise Länge und Breite eines Rohrwandrisses. Die Kameraachse wird nacheinander auf die Enden des Rohrrisses als Zielpunkte eingestellt und durch jeweiliges Drücken der Eingabetaste werden die beiden in der Auswerteelektronik 32 errechneten Sichtlinienlängen $L_1$, $L_2$ zwischengespeichert. Der Fahrwagen wird dabei nicht bewegt. Ohne weitere manuelle Eingaben errechnet das Programm der Auswerteelektronik 32 den Abstand A zwischen beiden Zielpunkten als Differenz der beiden Sichtlinienvektoren $L_1$ $L_2$ und zwar nach der Formel:

$$A = \sqrt{L_1^2 - 2L_1 L_2 K + L_2^2}$$

wobei der Wert K in Abhängigkeit vom Drehwinkel T und Schwenkwinkel P der Kamera nach der Formel

$$K = \cos(P_1)\cos(P_2) + \cos(T_1 - T_2)\sin(P_1)\sin(P_2)$$

errechnet wird.

**Patentansprüche**

1. Verfahren zum Betreiben eines fahrbaren Rohrinspektionsgerätes (10), das einen, um zwei rechtwinklig zueinander liegende Achsen (24, 28) verschwenkbaren Kamerakopf (14) aufweist, dessen Schwenkbewegungen von fernsteuerbaren Motoren bewirkt und mittels Drehwinkel-Meßwertgebern gemessen werden, deren Meßsignale auf einem Monitor darstellbar und auswertbar sind, **dadurch gekennzeichnet, daß** die Meßsignale der Drehwinkel-Meßwertgeber einer Auswerteelektronik (32, 46) zugeführt werden, die nach Eingabe oder Messung von rohrspezifischen Konstanten, welche dem Rohrradius (R) und dem Rohrachsabstand (D) des Kameraobjektivs (36) proportional sind, die Sichtlinienlänge, L, zwischen Kameraobjektiv (36) und einem Zielpunkt auf der Rohrinnenfläche errechnet und in Abhängigkeit von diesem Rechenwert, L, mindestens eine der folgenden Operationen durchgeführt wird:

a) die Auswerteelektronik (32, 46) ermittelt die dem Rechenwert, L, entsprechende Sollposition des Objektives (36) oder Bildaufnehmers (41) und aktiviert dessen Antrieb bis die Kamera (18) auf den Zielpunkt automatisch fokussiert ist;

b) die Beleuchtungsstärke eines Scheinwerfers (20) des Inspektionsgerätes (10) und/oder die Einstellung einer Blende der Kamera (18) wird/werden automatisch in Abhängigkeit von der Sichtlinienlänge, L, verändert;

c) die Position des Zielpunktes wird durch Errechnung der Koordinaten X, Y in der Auswerteelektronik (32, 46) auf einem Monitor angezeigt; und

d) der Rechenwert $L = L_1$ oder die Positionskoordinaten des Zielpunktes wird/werden zwischengespeichert und die Kamera (18) wird auf einen zweiten Zielpunkt gerichtet, die auf ihn bezogene zweite Sichtlinienlänge, $L_2$, wird errechnet und der Abstand beider Zielpunkte wird durch vektorielle Subtraktion beider Sichtlinienlängen $L_1$, $L_2$ in der Auswerteelektronik (32, 46) rechnerisch ermittelt.

2. Verfahren nach Anspruch 1, **dadurch gekennzeichnet, daß** die Auswerteelektronik (32, 46) ein Rechenprogramm aufweist, das die Sichtlinienlänge, L, wenigstens annäherungsweise nach der Gleichung

$$L = \frac{D \sin T + \sqrt{R^2 - D^2 \cos^2 T}}{\sin P}$$

oder einen entsprechenden Näherungsgleichung errechnet,
wobei

D = Abstand Rohrachse - Kameraachse,
R = Rohrradius,
T = Drehwinkel des Kamerakopfes (14), und
P = Schwenkwinkel des Kameragehäuses (16)

bedeuten.

3. Verfahren zur Abstandsbestimmung zweier Zielpunkte auf der Rohroberfläche nach Anspruch 1 oder 2, **dadurch gekennzeichnet, daß** beide Sichtlinienlängen $L_1$, $L_2$ bei unveränderter Position des Fahrwagens des Inspektionsgerätes (10) bestimmt werden und das Programm der Auswerteelektronik (32, 46) lediglich mit diesen beiden Rechenwerten und den Winkeln $T_1$, $T_2$ des Kamerakopfes (14) und den Winkeln $P_1$, $P_2$ des Kameragehäuses (16) den Abstand A ermittelt.

4. Verfahren zur Abstandsbestimmung zweier Zielpunkte auf der Rohroberfläche nach einem der Ansprüche 1-3, **dadurch gekennzeichnet, daß** die Auswerteelektronik (32, 46) ein Rechenprogramm aufweist, das den Abstand A zwischen zwei Zielpunkten wenigstens näherungsweise nach der Gleichung

$$A= \sqrt{L_1{}^2 - 2L_1 L_2 K + L_2{}^2}$$

errechnet, wobei $L_1$, $L_2$ die auf die beiden Zielpunkte gerichteten Sichtlinienlängen bedeuten und der Wert K nach der Formel oder einem dieser entsprechenden Näherungsverfahren errechnet wird

$$K= \cos(P_1) \cos(P_2) + \cos(T_1 - T_2) \sin(P_1) \sin(P_2),$$

wobei $T_1$, $T_2$ die zugehörigen Drehwinkel des Kamerakopfes (14) und $P_1$, $P_2$ die Schwenkwinkel des Kameragehäuses 16 bedeuten.

5. Verfahren nach einem der Ansprüche 1-4, **dadurch gekennzeichnet, daß** die Kamera (18) zu Beginn der Rohrinspektion um 90° in eine Querposition geschwenkt und der Kamerakopf (14) in eine erste Drehposition mit Blickrichtung rechtwinklig zur Fahrebene gedreht und die Kamera (18) anschließend um 180° in eine zweite Position gedreht oder geschwenkt wird und in beiden Positionen die Kamera (18) durch Fernsteuerung ihres Stellantriebes (38) anhand eines Monitors jeweils manuell fokussiert wird, daß aus den jeweils errechneten Sichtlinienlängen L in der Auswerteelektronik (32, 46) der Rohrdurchmesser, R, und der Rohrachsabstand, D, der Kamera als Eingabewerte für die anschließende automatische Fokussierung ermittelt werden.

6. Rohrinspektionsgerät mit einem an einem Fahrwagen montierten Kamerakopf (14), der um eine in Fahrrichtung liegende Längsachse (24) drehbar und dessen Kameragehäuse (16) um eine rechtwinklig dazu liegende Achse (28) verschwenkbar gelagert ist, weiterhin mit entsprechenden fernsteuerbaren Antrieben und Drehwinkel-Meßwertgebern für diese Bewegungen, wobei das Objektiv (36) oder der Bildaufnehmer (41) der Kamera (18) zur Fokussierung in Kameralängsrichtung verstellbar angeordnet und mit einem fernsteuerbaren Stellantrieb (38) ausgestattet ist, **dadurch gekennzeichnet, daß** eine Auswerteelektronik (32, 46) vorgesehen ist, in welcher die Signale der Drehwinkel-Meßwertgeber des Kamerakopfes (14) in digitalisierter Form laufend zusammen mit konstanten Eingabedaten, welche mindestens einen der Kanalrohrweite proportionalen Wert, R, sowie mindestens einen, dem Abstand, D, der Kamerarotationsachse (24) von der Wand oder der Achse des Rohres proportionalen Wert umfassen, nach einem vorgegebenen Programm zu einem momentanen Rechenwert verarbeitet werden, der der Sichtlinienlänge, L, zwischen Objektiv (36) und dem in dessen Blickrichtung liegenden Zielpunkt auf der Rohrwand proportional ist, und wobei die Auswerteelektronik (32, 46) den Stellantrieb (38) des Objektivs (36) oder Bildaufnehmers (41) aktiviert, bis dessen durch einen Positionsmeßwertgeber (44) bestimmten Istwert mit dem, dem Rechenwert L entsprechenden Sollwert übereinstimmt, bei dem die Kamera (18) auf den momentan aufgenommenen Rohrwandbereich automatisch fokussiert ist.

7. Rohrinspektionsgerät nach Anspruch 6, **dadurch gekennzeichnet, daß** der Stellantrieb (38) für den Bildaufnehmer (41) eine Exzenterscheibe aufweist, und daß der Positionsmeßwertgeber (44) ein Linearwegaufnehmer ist.

**Claims**

1. A method for operating a drivable pipe inspection device (10), which comprises a camera head (14), which is pivotable about two axes (24, 26) lying at right angles to one another and whose pivoting movements are effected by remote-controllable motors and are measured by means of rotary angle pickups, whose measurement signals can be displayed on a monitor and evaluated, characterised in that the measurement signals of the rotary angle pickups are supplied to evaluating electronics (32, 46), which, following the input or measurement of pipe-specific constants, which are proportional to the pipe radius (R) and the pipe axial distance (D) of the camera lens (36), calculate the line of sight length L between the camera lens (36) and a sighting point on the pipe inner surface and as a function of this calculation value L at least one of the following operations is carried out:

  a) the.evaluating electronics (32, 46) determine the nominal position of the lens (36) or visual receiver (41) corresponding to the calculation value L and -actuate the drive thereof until the camera (18) is automatically focused on the sighting point;

  b) the intensity of illumination of a searchlight (20) of the inspection device (10) and/or the adjustment of an aperture ofthe camera (18) is/are varied automatically as a function of the line of sight length L;

  c) the position of the sighting point is displayed on a monitor by calculating the coordinates X, Y in the evaluating electronics (32, 46); and

  d) the calculation value $L = L_1$ or the position coordinates of the sighting point is/are intermediately stored and the camera (18) is aimed at a second sighting point, the second line of sight length $L_2$ relating to the second sighting point is calculated and the distance between the two sighting points is determined by computation in the evaluating electronics (32, 46) by the vectorial subtraction of the two line of sight lengths $L_1$, $L_2$.

2. A method according to claim 1, characterised in that the evaluating electronics (32, 46) comprise a computer program, which calculates the line of sight length L at least approximately according to the equation

$$L = \frac{D \sin T + \sqrt{R^2 - D^2 \cos^2 T}}{\sin P}$$

or a corresponding approximation equation, where

D = distance pipe axis - camera axis,
R = pipe radius,
T = rotary angle of the camera head (14), and
P = pivoting angle of the camera housing (16).

3. A method for determining the distance between two sighting points on the pipe surface according to claim 1 or 2, characterised in that both line of sight lengths $L_1$, $L_2$ are determined with the carriage of the inspection device (10) in the same position and the program of the evaluating electronics (32, 46) determines the distance A solely by way of these two calculation values and the angles $T_1$, $T_2$ of the camera head (14) and the angles $P_1$, $P_2$ of the camera housing (16).

4. A method for determining the distance between two sighting points on the pipe surface according to one of claims 1 to 3, characterised in that the evaluating electronics (32, 46) comprise a computer program which calculates the distance A between two sighting points at least approximately according to the equation

$$A = \sqrt{L_1^2 - 2L_1 L_2 K + L_2^2}$$

where $L_1$, $L_2$ represent the line of sight lengths directed towards the two sighting points and the value K is calculated according to the following formula or a corresponding approximation method

$$K = \cos(P_1) \cos(P_2) + \cos(T_1 - T_2) \sin(P_1) \sin(P_2),$$

where $T_1$, $T_2$ represent the associated rotary angles of the camera head (14) and $P_1$, $P_2$ the pivot angles of the camera housing (16).

5. A method according to one of claims 1 to 4, characterised in that, at the start of the pipe inspection, the camera (18) is pivoted through 90° into a transverse position and the camera head (14) is rotated into a first rotary position with a viewing direction at right angles to the plane of travel and the camera (18) is then rotated or pivoted through 180° into a second position and in both positions the camera (18) is manually focused by the remote control of its adjustment drive (38) with the aid of a monitor, the pipe diameter R and the pipe axial distance D of the camera are determined in the evaluating electronics (32, 46) from the respective calculated line of sight lengths L as input values for the subsequent automatic focusing.

6. A pipe inspection device with a camera head (14), which is mounted on a carriage, is rotatable about a longitudinal axis (24) lying in the direction of travel and whose camera housing (16) is mounted so as to pivot about an axis (28) lying at right angles to the axis (24), furthermore with corresponding remote-controllable drives and rotary angle pickups for said movements, the lens (36) or the visual receiver (41) of the camera (18) being displaceably arranged in the longitudinal direction of the camera for focusing and being equipped with a remote-controllable adjustment drive (38), characterised in that evaluating electronics (32, 46) are provided, in which the signals of the rotary angle pickups of the camera head (14) are-continuously processed in digitised form together with constant input data, which includes at least one value R proportional to the duct pipe width, and at least one value proportional to the distance D of the camera rotational axis (24) from the wall or the axis of the pipe, according to a predetermined program to produce an instantaneous calculation value, which is proportional to the line of sight length L between the lens (36) and the sighting point on the pipe wall lying in the viewing direction of the lens (36), and the evaluating electronics (32, 46) actuating the adjustment drive (38) of the lens (36) or visual receiver (41) until the actual value thereof determined by a position pickup (44) matches the nominal value corresponding to the calculation value L, in which the camera (18) is automatically focused on the pipe wall region currently being recorded.

7. A pipe inspection device according to claim 6, characterised in that the adjustment drive (38) for the visual receiver (41) comprises an eccentric disc, and the position pickup (44) is a linear path pickup.


**Revendications**

1. Procédé d'actionnement d'un dispositif mobile (10) d'inspection d'un tuyau qui présente une tête de caméra (14), pivotable autour de deux axes (24, 28) se trouvant perpendiculaires entre eux, dont les mouvements de pivotement sont provoqués par des moteurs à commande à distance et mesurés à l'aide de capteurs de valeur de mesure d'angle de rotation dont les signaux de mesure peuvent être représentés et évalués sur un moniteur, caractérisé par le fait que les signaux de mesure des capteurs de valeur de mesure d'angle de rotation sont amenés à une électronique d'évaluation (32, 46) qui, après entrée ou mesure de constantes spécifiques au tuyau, qui sont proportionnelles au rayon de tuyau (R) et à l'entr'axe de tuyau (D) de l'objectif (36) de la caméra, calcule la longueur de ligne de vision, L, entre l'objectif (36) de la caméra et un point cible sur la surface intérieure du tuyau et qu'il est effectué automatiquement, en fonction de cette valeur calculée, L, au moins l'une des opérations suivantes:

a) l'électronique d'évaluation (32, 46) détermine la position de consigne de l'objectif (36) ou du dispositif de prise de vues (41) correspondant à la valeur calculée, L, et active son entraînement jusqu'à ce que la caméra (18) est automatiquement focalisée sur le point cible,
b) l'intensité d'éclairage d'un projecteur (20) du dispositif d'inspection (10) et/ou le réglage d'un diaphragme de la caméra (18) est (sont) automatiquement modifié(s) en fonction de la longueur de ligne de vision, L,
c) la position du point cible est affichée sur un moniteur par le calcul des coordonnées, X, Y, dans l'électronique d'évaluation (32, 46), et

d) la valeur calculée, $L = L_1$, ou les coordonnées de position du point cible est (sont) mémorisée(s) provisoirement et la caméra (18) est orientée sur un second point cible; la seconde longueur de ligne de vision, $L_2$, se rapportant à ce dernier est calculée et la distance entre les deux points cibles est calculée mathématiquement dans l'électronique d'évaluation (32, 46), par soustraction vectorielle des deux longueurs de ligne de vision, $L_1$, $L_2$.

2. Procédé suivant la revendication 1, caractérisé par le fait que l'électronique d'évaluation (32, 46) présente un programme de calcul qui calcule la longueur de ligne de vision, L, au moins par approximation, selon l'équation

$$L = \frac{D \sin T + \sqrt{R^2 - D^2 \cos^2 T}}{\sin P}$$

ou une équation d'approximation correspondante, où

D = distance entre axe de tuyau et axe de caméra,
R = rayon de tuyau
T = angle de rotation de la tête de caméra (14), et
P = angle de pivotement du boîtier de caméra (16).

3. Procédé de détermination de la distance entre deux points cibles sur la surface de tuyau suivant la revendication 1 ou 2, caractérisé par le fait que les deux longueurs de ligne de vision, $L_1$, $L_2$, sont déterminées à position inchangée du véhicule du dispositif d'inspection (10) et que le programme de l'électronique d'évaluation (32, 46) détermine la distance, A, uniquement à l'aide de ces deux valeurs calculées et des angles, $T_1$, $T_2$, de la tête de caméra (14) et des angles, $P_1$, $P_2$, du boîtier de caméra (16).

4. Procédé de détermination de la distance entre deux points cibles sur la surface de tuyau suivant l'une des revendications 1 à 3, caractérisé par le fait que l'électronique d'évaluation (32, 46) présente un programme de calcul qui calcule la distance, A, entre deux points cibles au moins par approximation, selon la formule

$$A = \sqrt{L_1^2 - 2L_1 L_2 K + L_2^2}$$

$L_1$, $L_2$ signifiant les longueurs de ligne de vision orientées sur les deux points cibles et la valeur K étant calculée selon la formule, ou un procédé d'approximation correspondant à celle-ci

$$K = \cos(P_1) \cos(P_2) + \cos(T_1 - T_2) \sin(P_1) \sin(P_2),$$

$T_1$, $T_2$ signifiant les angles de rotation correspondants de la tête de caméra (14) et $P_1$, $P_2$ les angles de pivotement du boîtier de caméra (16).

5. Procédé suivant l'une des revendications 1 à 4, caractérisé par le fait qu'au début de l'inspection du tuyau, la caméra (18) est pivotée de 90° en une position transversale et la tête de caméra (14) est tournée en une première position de rotation à sens de regard perpendiculaire au plan de déplacement et qu'ensuite, la caméra (18) est tournée ou pivotée de 180° en une seconde position et quel dans chacune des deux positions, la caméra (18) est focalisée manuellement par commande à distance de son entraînement de réglage (38), sur base d'un moniteur, qu'à partir de chacune des longueurs de ligne de vision, L, calculées dans l'électronique d'évaluation (32, 46) sont déterminés, comme valeurs d'entrée pour la focalisation automatique successive, le diamètre de tuyau, R, et l'entr'axe de tuyau, D, de la caméra.

6. Dispositif d'inspection de tuyau, avec une tête de caméra (14), montée sur un véhicule, qui est montée de manière rotative autour d'un axe longitudinal (24) se trouvant dans le sens de roulage et dont le boîtier de caméra (16) est monté de manière pivotable autour d'un axe (28) se trouvant perpendiculaire à ce dernier, par ailleurs, avec des entraînements à commande à distance correspondants et des capteurs de valeur de mesure d'angle de rotation de ces mouvements, l'objectif (36) ou le dispositif de prise de vues (41) de la caméra (18) étant disposé mobile dans le sens longitudinal de la caméra, en vue de la focalisation, et équipé d'un entraînement de réglage (38) à commande à distance, caractérisé par le fait qu'il est prévu une électronique d'évaluation (32, 46) dans laquelle les signaux de capteurs de valeur de mesure d'angle de rotation de la tête de caméra (14) sont, ensemble, avec des données constantes entrées qui comprennent au moins une valeur proportionnelle à la largeur de la canalisation, R, ainsi qu'au moins une valeur proportionnelle à la distance, D, entre l'axe de rotation de la caméra (24) et la paroi ou l'axe du tuyau, en permanence convertis, selon un programmé prédéterminé, en forme numérique, pour former une valeur calculée momentanée qui est proportionnelle à la longueur de ligne de vision, L, entre l'objectif (36) et le point cible sur la paroi de tuyau situé dans le sens de regard de ce dernier, l'électronique d'évaluation (32, 46) activant l'entraînement de réglage (38) de l'objectif (36) ou du dispositif de prise de vues (41), jusqu'à ce que sa valeur réelle déterminée par un capteur de valeur de mesure de position (44) coïncide avec la valeur de consigne correspondant à la valeur calculée, L, à laquelle la caméra (18) est automatiquement focalisée sur la zone de paroi de tuyau photographiée à ce moment.

7. Dispositif d'inspection de tuyau suivant la revendication 6, caractérisé par le fait que l'entraînement de réglage (38) du dispositif de prise de vues (41) présente un disque excentrique et que le capteur de valeur de mesure de position (44) est un capteur de trajet linéaire.

FIG.1

FIG.2